# DEMANDE DE BREVET EUROPEEN

(11) **EP 4 386 906 A1**
(43) Date de publication de la demande: **19.06.2024**
(21) Numéro de dépôt: 22306887.5
(22) Date de dépôt: 15.12.2022
(51) Int. Cl.: H01M 4/583, H01M 10/04, H01M 10/0525, H01M 50/414, H01M 50/46

(54) **PROCÉDÉ DE RÉALISATION D'UNE CELLULE ÉLECTROCHIMIQUE ET CELLULE ÉLECTROCHIMIQUE AINSI OBTENUE**

(71) Demandeur: Automotive Cells Company SE, 92300 Levallois Perret (FR)
(72) Inventeur: ULLDEMOLINS, Michel, 33300 BORDEAUX (FR); GOITIA-SANCHEZ, Estibaliz, 33110 LE BOUSCAT (FR)
(74) Mandataire: Lavoix

(57) **Abrégé**

L'invention concerne un procédé de réalisation d'une cellule électrochimique (10), comportant :
- une étape de formation d'un empilement comprenant : une première et une seconde électrodes (20) d'extrémité ; et au moins une électrode intermédiaire (16), disposée entre les électrodes d'extrémité ; chacune des électrodes d'extrémité comprenant : une couche (34) d'extrémité, une couche (28) de collecteur de courant et une couche (32) intermédiaire superposées, la couche d'extrémité et la couche intermédiaire étant formées d'un matériau électrochimique, la couche d'extrémité étant disposée à une extrémité de l'empilement ;
- une étape de solidarisation de l'empilement ainsi formé ; et
- une étape de dépôt d'un revêtement (24) de protection sur au moins l'une des couches d'extrémité des électrodes d'extrémité, le revêtement de protection étant configuré pour bloquer des échanges électrochimiques dans ladite couche d'extrémité.

## Description

La présente invention concerne le domaine des batteries, par exemple des batteries pour véhicule électrique ou hybride.

La présente invention concerne plus particulièrement un procédé de réalisation d'une cellule électrochimique et encore plus particulièrement un procédé de réalisation d'un empilement électrochimique pour une cellule électrochimique.

On entend par « batterie » une pluralité de cellules électrochimiques reliées électriquement les unes aux autres. Chaque cellule électrochimique comprend, en particulier, un empilement connu sous le terme de « stack », comportant des couches successives dans une direction d'empilement formant des électrodes positives et des électrodes négatives séparées par une couche de séparation, connu sous le terme de « séparateur ». Les électrodes positives reliées les unes aux autres forment une borne positive, et les électrodes négatives reliées les unes aux autres forment une borne négative de l'empilement électrochimique.

L'invention s'applique particulièrement aux cellules électrochimiques de type lithium-ion et de préférence aux cellules électrochimiques de forme prismatique.

De manière classique, les électrodes utilisées sont bifaces, c'est-à-dire qu'elles comprennent deux couches de matériau électrochimique enserrant une couche de collecteur de courant.

Les extrémités de l'empilement sont donc formées d'une couche de matériau électrochimique qui n'est pas en vis-à-vis d'une autre électrode.

Cette couche de matériau est polarisée car reliée aux autres électrodes de l'empilement. Des inconvénients peuvent en découler. Par exemple, dans les cellules électrochimiques de type lithium-ion, une migration de lithium peut se produire en direction de cette couche de matériau, ce qui dégrade dans le temps les propriétés de la cellule.

La présente invention a pour but de résoudre ce problème. A cet effet, l'invention a pour objet un procédé du type précité, comprenant une étape de formation d'un empilement selon une direction principale, ledit empilement comprenant : une première et une seconde électrodes d'extrémité ; et au moins une électrode intermédiaire, disposée entre les première et seconde électrodes d'extrémité selon la direction principale ; chacune des électrodes d'extrémité comprenant : une couche d'extrémité, une couche de collecteur de courant et une couche intermédiaire superposées selon la direction principale, la couche d'extrémité et la couche intermédiaire étant formées d'un matériau électrochimique, la couche d'extrémité étant disposée à une extrémité de l'empilement dans la direction principale. Le procédé comprend en outre : une étape de solidarisation de l'empilement ainsi formé ; et une étape de dépôt d'un revêtement de protection sur au moins l'une des couches d'extrémité des première et seconde électrodes d'extrémité, le revêtement de protection étant configuré pour bloquer des échanges électrochimiques dans ladite couche d'extrémité.

Suivant d'autres aspects avantageux de l'invention, le procédé comporte l'une ou plusieurs des caractéristiques suivantes, prises isolément ou suivant toutes les combinaisons techniquement possibles :
- le revêtement comporte un ou plusieurs polymères, préférentiellement choisis parmi les poyfluorures de vinylidène (PVDF), les carboxyméthylcelluloses (CMC), les polyéthylènes (PE), les polypropylènes (PP), les polyéthylène téréphtalates (PET), les acides polyacryliques (PAA) et les polyuréthanes (PU) ;
- l'empilement comprend en outre une pluralité de couches de séparation, chacune desdites couches de séparation étant disposée entre deux électrodes consécutives dans la direction principale ;
- dans l'empilement, deux électrodes consécutives dans la direction principale comprennent une électrode positive et une électrode négative ;
- au moins l'une des première et seconde électrodes d'extrémité est une électrode négative ;
- la couche d'extrémité de l'au moins une des première et seconde électrodes d'extrémité comporte des particules de graphite ;
- l'étape de dépôt d'un revêtement de protection comprend : l'enduction de la couche d'extrémité de la première ou seconde électrode d'extrémité, par le revêtement dissous dans un solvant ; puis l'évaporation dudit solvant ;
- l'étape de dépôt d'un revêtement de protection comprend la solidarisation d'un film solide avec la couche d'extrémité de la première ou seconde électrode d'extrémité ;
- la formation de l'empilement comprend le dépôt du film solide au contact de la couche d'extrémité de la première ou seconde électrode d'extrémité ; et la solidarisation dudit film solide avec ladite couche d'extrémité est réalisée au cours de l'étape de solidarisation de l'empilement ;
- la solidarisation de l'empilement est réalisée par pressage à chaud.

L'invention se rapporte en outre à une cellule ou structure électrochimique comprenant un empilement selon une direction principale, ledit empilement comprenant : une première et une seconde électrodes d'extrémité ; et au moins une électrode intermédiaire, disposée entre les première et seconde électrodes d'extrémité selon la direction principale ; lesdites électrodes étant solidarisées entre elles ; chacune des électrodes d'extrémité comprenant : une couche d'extrémité, une couche de collecteur de courant et une couche intermédiaire superposées selon la direction principale, la couche d'extrémité et la couche intermédiaire étant formées d'un matériau électrique, la couche d'extrémité étant disposée à une extrémité de l'empilement dans la direction principale ; au moins l'une des couches d'extrémité des première et seconde électrodes d'extrémité étant couverte d'un revêtement de protection configuré pour bloquer des échanges électrochimiques dans ladite couche d'extrémité.

Suivant d'autres aspects avantageux de l'invention, la cellule électrochimique comporte l'une ou plusieurs des caractéristiques suivantes, prises isolément ou suivant toutes les combinaisons techniquement possibles :
- chacune des couches d'extrémité des première et seconde électrodes d'extrémité est couverte d'un revêtement de protection configuré pour bloquer des échanges électrochimiques dans ladite couche d'extrémité ;
- la cellule électrochimique est de type lithium-ion ;
- la cellule électrochimique comprend en outre une enveloppe au contact des extrémités de l'empilement selon la direction principale.

L'invention sera mieux comprise à la lecture de la description qui va suivre, donnée uniquement à titre d'exemple non limitatif et faite en se référant aux dessins sur lesquels :
- la figure 1 est une vue schématique partielle d'une cellule électrochimique comprenant un empilement électrochimique selon un mode de réalisation de l'invention ; et
- la figure 2 est une vue schématique de procédés de réalisation de la cellule électrochimique de la figure 1.

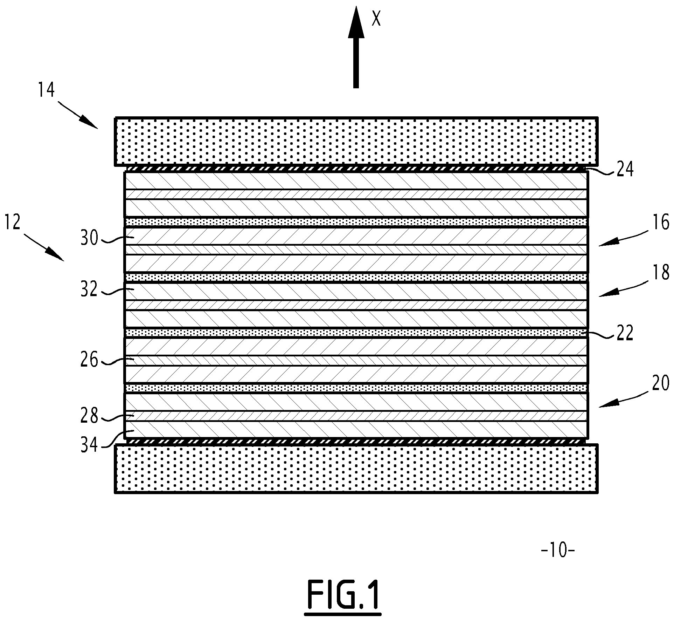

La figure 1 représente schématiquement une cellule électrochimique 10. La cellule électrochimique 10 comporte une structure électrochimique 12 et une enveloppe 14.

La structure électrochimique 12 comprend un empilement d'électrodes 16, 18, 20 solidaires entre elles, ledit empilement s'étendant selon une direction principale X d'empilement. La structure électrochimique 12 comprend également : une pluralité de couches 22 de séparation ; et au moins un revêtement 24 de protection.

Plus précisément, la structure électrochimique 12 comprend : une ou plusieurs électrodes intermédiaires 16, 18, chacune desdites électrodes intermédiaires étant située entre deux autres électrodes de l'empilement ; et une première et une seconde électrodes d'extrémité 20, disposées à chaque extrémité de la structure électrochimique 12 selon la direction principale X.

Le nombre d'électrodes intermédiaires 16, 18 est supérieur ou égal à un. Sur la figure 1, la structure électrochimique 12 comprend un faible nombre d'électrodes intermédiaires 16, 18 mais ce nombre peut être plus élevé, par exemple de l'ordre de plusieurs dizaines ou centaines.

Dans le mode de réalisation représenté, l'enveloppe 14 entoure la structure électrochimique 12, notamment au niveau des extrémités selon X de ladite structure.

Chaque électrode 16, 18, 20 comprend une couche 26, 28 de collecteur de courant et deux couches électrochimiques 30, 32, 34, disposées de part et d'autre de ladite couche 26, 28 de collecteur.

Chaque couche électrochimique 30, 32, 34 est formée d'un matériau électrochimique, c'est-à-dire d'un matériau apte à subir une réaction chimique comprenant l'émission ou l'absorption d'électrons.

De manière préférentielle, la structure électrochimique 12 et la cellule électrochimique 10 sont basées sur la technologie lithium-ion. Des matériaux adaptés seront précisés par la suite.

Un premier groupe d'électrodes 16 comprend des électrodes positives ou cathodes. Chaque couche électrochimique 30 d'une électrode positive 16 est de préférence formée d'un matériau choisi parmi : les matériaux répondant à l'appellation NMC, NCM et NMX, par exemple LiₓNi_{y}Mn_{z}CoₐM_{b}O₂ avec 0,9≤x≤1,3, 0≤y,z,a,b≤1, y+z+a+b = 1 ; les matériaux répondant à l'appellation LFP, LFMP, LMFP, par exemple LiFeₓMn_{y}PO4 avec 0≤x,y≤1, x+y = 1 ; ou les mélanges de matériaux précédemment cités.

Un deuxième groupe d'électrodes 18, 20 comprend des électrodes négatives ou anodes. Chaque couche électrochimique 32, 34 d'une électrode négative 18, 20 est par exemple formée d'un matériau choisi parmi : des particules de graphite, par exemple graphite naturel ou graphite artificiel ; SiOₓ avec 0,8≤x≤1,2 ; composite silicium carbone, tout type de matériau à base de silicium ; Li₄Ti₅O₁₂ ; ou tout mélange de matériaux précédemment cités.

Les électrodes négatives 18, 20 et les électrodes positives 16 sont disposées de manière alternée selon la direction principale X.

Dans le mode de réalisation représenté, les première et seconde électrodes d'extrémité 20 sont des électrodes négatives. De manière préférentielle, les électrodes d'extrémité de l'empilement sont les électrodes ne constituant pas la source principale de lithium.

Chaque électrode négative intermédiaire 18 comporte une couche 28 de collecteur de courant et deux couches électrochimiques 32 disposées de part et d'autre de ladite couche 28 de collecteur. Chaque électrode d'extrémité comporte une couche électrochimique 32 intermédiaire et une couche électrochimique 34 d'extrémité, disposées de part et d'autre d'une couche 28 de collecteur de courant. De préférence, les couches électrochimiques intermédiaire 32 et d'extrémité 34 sont formées d'un même matériau.

La couche électrochimique intermédiaire 32 de chaque électrode d'extrémité 20 est disposée en vis-à-vis d'une électrode positive 16. En revanche, la couche électrochimique d'extrémité 34 de chaque électrode d'extrémité 20 est disposée en vis-à-vis de l'enveloppe 14 de la cellule électrochimique 10.

Chaque couche 22 de séparation est disposée entre deux électrodes 16, 18, 20 de la structure électrochimique 12 selon la direction principale X. Plus précisément, chaque couche 22 de séparation est disposée entre une électrode négative 18, 20 et une électrode positive 16.

Chaque couche 22 de séparation est par exemple formée d'un matériau choisi parmi le polyéthylène (PE), le polypropylène (PP), la cellulose, le polyimide (PI), le polyamide (PA), le polyamideimide (PAI) ou toute combinaison possible de ces matériaux.

L'au moins un revêtement 24 de protection est disposé sur la couche électrochimique 34 d'extrémité de la première ou de la seconde électrode d'extrémité 20. Ainsi, l'au moins un revêtement 24 de protection forme une extrémité de la structure électrochimique 12.

De préférence, la structure électrochimique 12 comprend deux revêtements 24 de protection, chacun desdits revêtements 24 formant une extrémité de ladite structure et étant disposé sur l'une des couches électrochimiques 34 d'extrémité.

Ainsi, dans la cellule électrochimique 10, chaque revêtement 24 de protection est disposé entre la couche électrochimique 34 d'extrémité correspondante et l'enveloppe 14.

Le revêtement 24 est configuré pour bloquer des échanges électrochimiques dans la couche électrochimique 34 d'extrémité correspondante. Plus précisément, le revêtement 24 est choisi pour ses propriétés d'isolant électrique et de blocage des ions lithium.

De préférence, le revêtement 24 est également choisi peu soluble ou non soluble dans les électrolytes usuellement utilisés.

De préférence, le revêtement 24 comporte un ou plusieurs polymères. Plus préférentiellement, le ou lesdits polymères sont choisis parmi les poyfluorures de vinylidène (PVDF), les carboxyméthylcelluloses (CMC), les polyéthylènes (PE), les polypropylènes (PP), les polyéthylène téréphtalates (PET), les acides polyacryliques (PAA) et les polyuréthanes (PU).

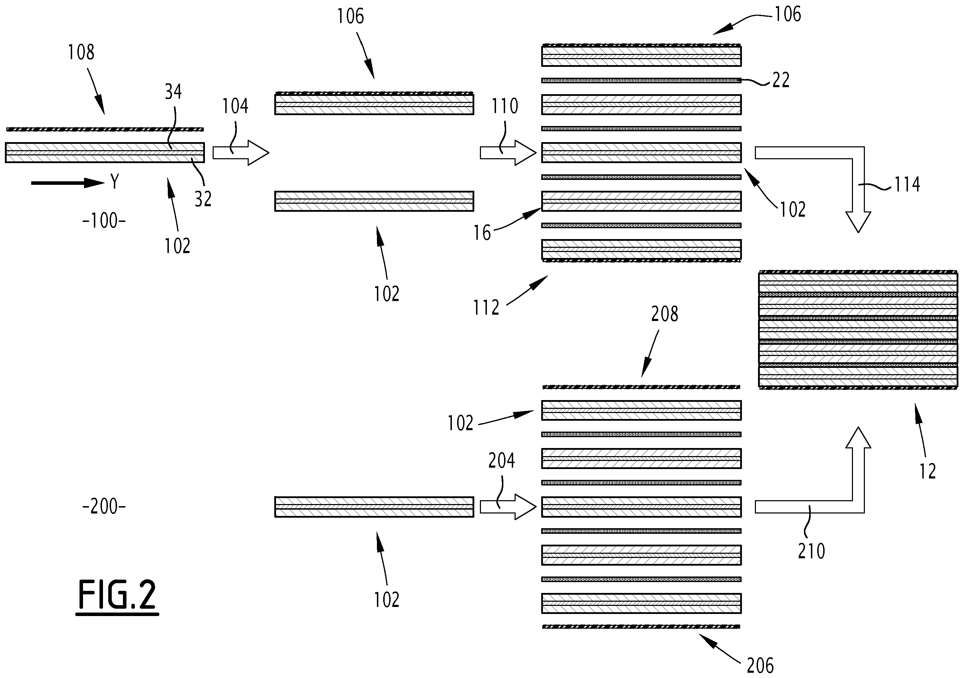

La figure 2 représente schématiquement des étapes d'un premier 100 et d'un deuxième 200 procédés de réalisation de la structure électrochimique 12.

Le premier procédé 100 va maintenant être décrit.

On considère une électrode initiale 102 destinée à former l'une ou les deux électrodes d'extrémité 20. De préférence, l'électrode initiale 102 est appropriée à un procédé continu, de type slot-die ou roll to roll. En particulier, l'électrode initiale 102 s'étend selon une direction longitudinale Y et présente préférentiellement une grande dimension parallèlement à ladite direction.

De même que l'électrode d'extrémité 20, l'électrode initiale 102 comprend une couche 28 de collecteur de courant et deux couches électrochimiques 32, 34, disposées de part et d'autre de ladite couche 28 de collecteur. Les couches électrochimiques 32, 34 sont préférentiellement identiques.

Dans une première étape 104 du premier procédé 100, une couche de revêtement 24 de protection est déposée sur la couche électrochimique 34, pour conduire à une électrode revêtue 106. Le dépôt est effectué sur la face de la couche électrochimique 34 opposée à la couche 28 de collecteur.

Selon un premier mode de réalisation, un film solide 108 de revêtement 24 est laminé sur la couche électrochimique 34 de l'électrode initiale 102.

Selon un deuxième mode de réalisation non représenté, la couche électrochimique 34 est enduite d'une solution de revêtement 24 dans un solvant, puis ledit solvant est évaporé, conduisant à un revêtement 24 solide. Le deuxième mode de réalisation peut être réalisé en continu par un procédé de type slot-die ou roll to roll.

Dans ledit deuxième mode de réalisation, la solution pénètre dans la porosité de la couche électrochimique 34, qui comprend par exemple des particules de graphite. Un tel procédé permet ainsi un meilleur niveau d'isolation électrique du revêtement 24.

Dans ledit deuxième mode de réalisation, le solvant est préférentiellement choisi de sorte à ne pas solubiliser la couche électrochimique 34 durant son application.

Dans une deuxième étape 110 du procédé 100, l'électrode revêtue 106 est mise en oeuvre pour former un empilement 112 précurseur de la structure électrochimique 12. L'étape 110 met également en oeuvre l'électrode initiale 102, destinée à former la ou les électrodes négatives intermédiaires 18 de ladite structure.

L'empilement 112 est réalisé selon la direction principale X, perpendiculaire à la direction longitudinale Y. L'une ou chacune des extrémités selon X dudit empilement 112 est formé de l'électrode revêtue 106. De même que la structure électrochimique 12, l'empilement 112 comprend des électrodes positives 16 et des couches 22 de séparation.

Dans une troisième étape 114 du procédé 100, l'empilement 112 est solidarisé pour former la structure électrochimique 12. L'étape 114 de solidarisation est par exemple mise en oeuvre par pressage à chaud.

Selon un mode de réalisation, les couches 22 de séparation comprennent un matériau adhésif qui assure la solidarisation des électrodes 16, 18, 20 entre elles lors de l'étape de pressage à chaud.

Le procédé 100 implique la mise en oeuvre, dans l'empilement 112, de deux types d'électrodes négatives sous la forme de l'électrode initiale 102 et de l'électrode revêtue 106.

Le deuxième procédé 200 va maintenant être décrit.

On considère l'électrode initiale 102 décrite précédemment. Dans une première étape 204 du procédé 200, un empilement 206 est réalisé. Ledit empilement est similaire à l'empilement 112 du procédé 100, à l'exception de ses extrémités selon la direction principale X.

Plus précisément, dans l'empilement 206, chaque électrode revêtue 106 située à une extrémité de l'empilement 112 est remplacée par une électrode initiale 102 et par un film solide 208 de revêtement 24, recouvrant la couche électrochimique 34 d'extrémité de ladite électrode initiale. Le film solide 208 est par exemple analogue au film solide 108 mis en oeuvre dans le procédé 100.

Dans une deuxième étape 210 du procédé 200, l'empilement 206 est solidarisé pour former la structure électrochimique 12. L'étape 210 de solidarisation est par exemple mise en oeuvre par pressage à chaud. Comme dans le procédé 100 précédemment décrit, les couches 22 de séparation comprennent de préférence un matériau adhésif qui assure la solidarisation des électrodes 16, 18, 20 entre elles lors de l'étape de pressage à chaud.

Le procédé 200 permet de mettre en oeuvre, dans l'empilement 206, un seul type d'électrode négative sous la forme de l'électrode initiale 102.

## Revendications

1. Procédé (100, 200) de réalisation d'une cellule ou structure électrochimique (10, 12), comprenant :
- une étape de formation d'un empilement (112, 206) selon une direction principale, ledit empilement comprenant : une première et une seconde électrodes (20, 106) d'extrémité ; et au moins une électrode intermédiaire (16), disposée entre les première et seconde électrodes d'extrémité selon la direction principale ; chacune des électrodes d'extrémité comprenant : une couche (34) d'extrémité, une couche (28) de collecteur de courant et une couche (32) intermédiaire superposées selon la direction principale, la couche d'extrémité et la couche intermédiaire étant formées d'un matériau électrochimique, la couche d'extrémité étant disposée à une extrémité de l'empilement dans la direction principale ; et
- une étape (114, 210) de solidarisation de l'empilement ainsi formé ;
le procédé étant **caractérisé en ce qu'**il comprend en outre une étape de dépôt d'un revêtement (24, 108, 208) de protection sur au moins l'une des couches d'extrémité des première et seconde électrodes d'extrémité, le revêtement de protection étant configuré pour bloquer des échanges électrochimiques dans ladite couche d'extrémité.

2. Procédé selon la revendication 1, dans lequel le revêtement (24) comporte un ou plusieurs polymères, préférentiellement choisis parmi les poyfluorures de vinylidène (PVDF), les carboxyméthylcelluloses (CMC), les polyéthylènes (PE), les polypropylènes (PP), les polyéthylène téréphtalates (PET), les acides polyacryliques (PAA) et les polyuréthanes (PU).

3. Procédé selon la revendication 1 ou la revendication 2, dans lequel l'empilement (112, 206) comprend en outre une pluralité de couches (22) de séparation, chacune desdites couches de séparation étant disposée entre deux électrodes consécutives dans la direction principale.

4. Procédé selon l'une des revendications précédentes, dans lequel, dans l'empilement, deux électrodes consécutives dans la direction principale comprennent une électrode positive (16) et une électrode négative (18, 20).

5. Procédé selon l'une des revendications précédentes, dans lequel au moins l'une des première et seconde électrodes d'extrémité (20) est une électrode négative.

6. Procédé selon la revendication 5, dans lequel la couche d'extrémité de l'au moins une des première et seconde électrodes d'extrémité comporte des particules de graphite.

7. Procédé selon l'une des revendications précédentes, dans lequel l'étape (104) de dépôt d'un revêtement (24) de protection comprend : l'enduction de la couche d'extrémité (34) de la première ou seconde électrode d'extrémité, par le revêtement dissous dans un solvant ; puis l'évaporation dudit solvant.

8. Procédé selon l'une des revendications 1 à 6, dans lequel l'étape de dépôt d'un revêtement de protection comprend la solidarisation d'un film solide (108, 208) avec la couche d'extrémité (34) de la première ou seconde électrode d'extrémité.

9. Procédé selon la revendication 8, dans lequel : la formation de l'empilement comprend le dépôt du film solide (208) au contact de la couche d'extrémité (34) de la première ou seconde électrode d'extrémité ; et la solidarisation dudit film solide avec ladite couche d'extrémité est réalisée au cours de l'étape (210) de solidarisation de l'empilement.

10. Procédé selon l'une des revendications précédentes, dans lequel la solidarisation (210) de l'empilement est réalisée par pressage à chaud.

11. Cellule ou structure électrochimique (10, 12) comprenant un empilement selon une direction principale (X), ledit empilement comprenant : une première et une seconde électrodes d'extrémité (20) ; et au moins une électrode intermédiaire (16, 18), disposée entre les première et seconde électrodes d'extrémité selon la direction principale ; lesdites électrodes étant solidarisées entre elles ;
chacune des électrodes d'extrémité comprenant : une couche d'extrémité (34), une couche (28) de collecteur de courant et une couche intermédiaire (32) superposées selon la direction principale, la couche d'extrémité et la couche intermédiaire étant formées d'un matériau électrique, la couche d'extrémité étant disposée à une extrémité de l'empilement dans la direction principale ;
au moins l'une des couches d'extrémité des première et seconde électrodes d'extrémité étant couverte d'un revêtement de protection (24) configuré pour bloquer des échanges électrochimiques dans ladite couche d'extrémité.

12. Cellule électrochimique selon la revendication 11, dans laquelle chacune des couches d'extrémité (34) des première et seconde électrodes d'extrémité est couverte d'un revêtement de protection (24) configuré pour bloquer des échanges électrochimiques dans ladite couche d'extrémité.

13. Cellule électrochimique selon la revendication 11 ou 12, ladite cellule étant de type lithium-ion.

14. Cellule électrochimique (10) selon l'une des revendications 11 à 13, comprenant en outre une enveloppe (14) au contact des extrémités de l'empilement selon la direction principale.
